# EUROPÄISCHE PATENTSCHRIFT

(11) **EP 0 988 472 B1**
(45) Veröffentlichungstag und Bekanntmachung des Hinweises auf die Patenterteilung: **14.03.2001**
(21) Anmeldenummer: 98937478.0
(22) Anmeldetag: 12.06.1998
(51) Int. Cl.: F16H 3/091, F16H 61/04

(54) **SYNCHRONISIERTES STUFENGETRIEBE**
SYNCHRONIZED MULTI-STEP REDUCTION GEAR
TRANSMISSION ETAGEE SYNCHRONISEE

(30) Priorität: 17.06.1997 DE 19725512
(43) Veröffentlichungstag der Anmeldung: 29.03.2000
(73) Patentinhaber: ZF FRIEDRICHSHAFEN Aktiengesellschaft, 88038 Friedrichshafen (DE)
(72) Erfinder: DÖBELE, Bernd, D-88682 Salem (DE)
(86) Internationale Anmeldenummer: EP9803553
(87) Internationale Veröffentlichungsnummer: WO9858193

(56) Entgegenhaltungen:
- EP-A- 0 173 117
- EP-A- 0 557 707
- BE-A- 407 403
- DE-A- 4 137 143
- DE-C- 19 505 323
- FR-A- 1 281 407
- US-A- 4 023 443
- PATENT ABSTRACTS OF JAPAN vol. 018, no. 432 (M-1654), 11. August 1994 -& JP 06 129533 A (HINO MOTORS LTD), 10. Mai 1994
- PATENT ABSTRACTS OF JAPAN vol. 007, no. 141 (M-223), 21. Juni 1983 -& JP 58 054260 A (MITSUBISHI DENKI KK), 31. März 1983

## Beschreibung

Die Erfindung bezieht sich auf ein synchronisiertes Stufengetriebe gemäß dem Patentanspruch 1.

Aus der EP 0 557 707 ist ein synchronisiertes Zahnräderstufengetriebe bekannt, bei dem die Losräder jeder Gangstufe jeweils über Synchronisierkupplungen mit der Getriebehauptwelle bei Drehzahlgleichheit kuppelbar sind. Die EP-A 557 707 zeigt dabei auf, daß für jeden zu schaltenden Gang die jeweils zugeordnete Synchronisierkupplung die Drehzahlgleichheit erzeugt, d. h. jede Gangstufe hat ihre eigene Synchronisierkupplung, mit der die für die jeweilige Gangstufe zur Schaltung erforderliche Drehzahl erreicht wird. Es wird in der EP-A-557 707 nicht beschrieben, daß eine einzige Synchronisierkupplung die Steigerung der Drehzahl zur Drehzahlangleichung für alle Vorwärtsgänge übernimmt.

Ebensowenig ist in der EP-A-557 707 beschrieben, daß eine einzige Synchronisierkupplung die Reduzierung der Drehzahl zur Drehzahlangleichung für alle Gänge übernimmt.

Derartige synchronisierte Stufengetriebe weisen eine Getriebehauptwelle mit mehreren Gangstufen auf, wobei die Zahnräder der einzelnen Gangstufen jeweils über Synchronisierungskupplungen mit der Hauptwelle des Getriebes gekuppelt werden, wenn Drehzahlgleichheit besteht. Zur Einstellung der Drehzahlgleichheit einer zu schaltenden Gangstufe ist die Änderung der Drehzahl der primärseitigen rotierenden Getriebemassen erforderlich. Zur Einstellung des Kraftschlusses muß zwischen den zu kuppelnden Massen in der Regel zwischen dem Ganglosrad der jeweiligen Gangstufe und der Antriebswelle Synchronlauf herrschen.

Der Angleich der Drehzahlen wird bei synchronisierten Getriebe häufig durch eine sog. Sperrsynchronisation erreicht, d. h. durch eine Kombination einer Reibungskupplung mit einem unter Reaktionsmoment axial sperrenden Schaltmechanismus. Bei unsynchronisierten klauengeschalteten Getrieben wird der Angleich der Drehzahlen durch Öffnen oder Schließen der Kupplung bei paralleler Beeinflussung der Getriebeeingangsdrehzahl über die Anhebung der Motordrehzahl oder durch Ansteuern einer Kupplungsbremse erzeugt, d.h. daß Zwischengas gegeben oder zwischengekuppelt wird.

Es sind auch Zentralsynchronisierungen bekannt, bei denen eine zusätzliche Radstufe zwischen der Abtriebswelle und der Antriebswelle mit einer zwischengeschalteten Reibungskupplung als Beschleuniger und eine zweite Reibungskupplung, die bei offener zwischengeschalteter Reibungskupplung die Antriebswelle reibschlüssig mit dem Getriebegehäuse verbindet, als Verzögerungsstufe verwendet werden. Ein Nachteil einer solchen Zentralsynchronisierung ist der erhebliche mechanische Mehraufwand für das Getriebe. Außerdem ist ein Reversieren nicht möglich.

Bei modernen synchronisierten Stufengetrieben wird mehr und mehr eine elektronische Steuerung verwendet, mit der die einzelnen Gänge geschaltet und die dabei auftretenden Funktionsabläufe kontrolliert werden. Ziel der Erfindung ist es, die elektronische Steuerung derartiger Getriebe auszunutzen und eine Drehzahlsynchronisation eines Vielganggetriebes mit einfachen Mitteln zu realisieren.

Der Erfindung liegt die Aufgabe zugrunde, ein Vielganggetriebe mit einer einfachen Synchronisiermöglichkeit anzugeben, so daß auch einfache klauengeschaltete Getriebe ohne Motornachführung und Getriebebremse geschaltet werden können.

Diese Aufgabe ist gemäß der Erfindung durch die Merkmale des Patentanspruches 1 gelöst.

Der Erfindung liegt die Erkenntnis zugrunde, daß durch die Verwendung elektronischer Steuerungen für die Schaltung von Getrieben ein Gleichlauf der anzupassenden Teile elektronisch geregelt werden kann, und daß somit der Sperrmechanismus bei einer Synchronisation von der Einrichtung zur Veränderung der Drehzahl, d. h. im allgemeinen einer Reibungskupplung, entkoppelt sein kann. Somit geht es nur noch darum, jedes Drehzahlniveau an der Mitnehmerscheibe einstellen zu können, wobei dieses Niveau begrenzt ist von der höchsten Gangübersetzung und dem Stillstand.

Die Lösung gemäß der Erfindung liegt darin, eine Reibungskupplung, z. B. eine Synchronisierungskupplung mit einem Reibkonus zwischen einem Anfahrgang-Losrad z. B. dem Losrad des ersten Ganges, und der Hauptwelle als Beschleuniger einzusetzen und eine weitere Kupplung, vorzugsweise wiederum eine Reibungskupplung, zwischen einer Rückwärtsgangstufe, z. B. dem Losrad des Rückwärtsganges, und der Hauptwelle als Verzögerer einzusetzen.

Diese Anordnung ermöglicht es, ein klauengeschaltetes Getriebe ohne Motornachführung und Getriebebremse schalten zu können.

Mit der Kupplung zwischen Getriebeeingang und Getriebeausgang über eine Anfahrstufe ist eine zur Drehzahlanpassung der Getriebeteile erforderliche steigende Drehzahl am Getriebeeingang für jeden Vorwärtsgang erreichbar. Durch eine vorzugsweise wiederum reibschlüssig kuppelbare Verbindung zwischen Getriebeeingang und Getriebeausgang über eine Rückwärtsgangstufe, z. B. den Radsatz des ersten Rückwärtsganges, ist die zur Drehzahlanpassung der rotierenden Getriebeteile notwendige fallende Drehzahl ebenfalls für jeden Gang erreichbar. Außerdem ist auch eine steigende reversierende Drehzahl zum Schalten des Rückwärtsganges erreichbar.

Durch die Konfiguration mit einem Beschleuniger und einem Verzögerer ist ein exakter Gleichlauf für das Schalten eines Rückwärtsganges und eines ersten Ganges unabhängig von der Richtung der Drehzahländerung einstellbar. Auf diese Weise müssen Beschleuniger und Verzögerer, d. h. die beiden eingefügten Reibungskupplungen, nicht wechselweise benutzt werden, wodurch die Steuerung des Getriebes vereinfacht wird.

Die beiden Kupplungen zur Drehzahlanpassung, d. h. zur Drehzahlerhöhung oder Drehzahlerniedrigung, werden aufgrund von Meßsignalen gesteuert, die mit einfachen Drehzahlsensoren an der Antriebswelle des Getriebes und an der Abtriebswelle ermittelt werden. Die Funktion der Kupplungen wird dann aufgrund dieser Signale durch die elektronische Steuereinheit kontrolliert, wobei die Schaltung der einzelnen Gangstufen bei einer Differenzdrehzahl von im Wesentlichen Null erfolgt.

Für die Betätigung der Kupplungen zum Beschleunigen bzw Verzögern der Drehzahl sind herkömmliche Stelleinrichtungen möglich, z. B. elektrisch/hydraulische, elektrisch/ pneumatische, elektrisch/mechanische oder elektrisch/magnetische Stelleinrichtungen für die Einstellung des Reib- und Kraftschlusses möglich. Mit diesen Stelleinerichtungen ist auch eine Servoschaltung möglich. Die Stelleinrichtungen werden bevorzugt über die elektronische Steuerungseinheit, z. B, mit Hilfe eines Mikrocomputers gesteuert, wobei dann auch andere Eingangsgrößen wie z. B. Istgang, Zielgang, Istdrehzahl der Antriebswelle und der Abtriebswelle etc. berücksichtigt werden können.

Die Erfindung ist in Ausführungsbeispielen anhand der Zeichnung näher erläutert.
In dieser stellen dar:
- Fig. 1: schematisch ein Stufengetriebe mit einer doppelt wirkenden Reibungskupplung zum Beschleunigen bzw. Absenken der Drehzahl der primärseitigen rotierenden Teile des Getriebes und
- Fig. 2: eine weitere Ausführungsform eines Stufengetriebes, bei dem beim Schalten ein Kraftschluß bei der Drehzahlanpassung möglich ist.

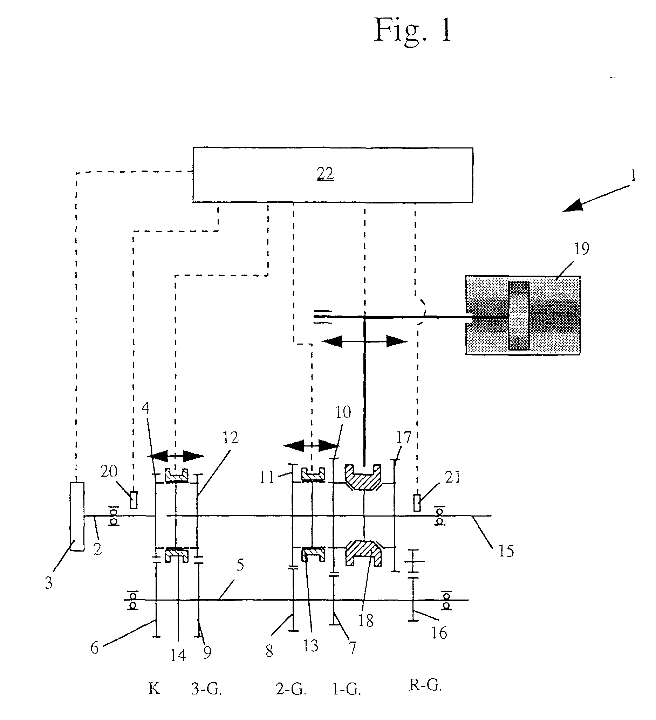

In Fig. 1 ist ein Zahnräderstufengetriebe 1 dargestellt, dessen Eingangswelle 2 über eine Fahrkupplung 3 mit einem nicht dargestellten Antriebsmotor kuppelbar ist. Mit der Eingangswelle 2 ist drehfest verbunden ein Eingangszahnrad 4, das mit einem drehfest auf einer Vorgelegewelle 5 sitzenden Zahnrad 6 ständig kämmt. Auf der Vorgelegewelle 5 sind weitere Zahnräder 7, 8 und 9 für drei Vorwärts-Gangstufen angeordnet, wobei das Zahnrad 7 den ersten Gang, d. h. der Anfahrstufe zugeordnet ist. Das Zahnrad 8 ist einer zweiten Vorwärtsgangstufe und das Zahnrad 9 einer dritten Vorwärtsgangstufe zugeordnet.

Diesen Zahnrädern auf der Vorlegewelle 5 sind entsprechende Losräder 10, 11 und 12 auf der Hauptwelle 15 zugeordnet, wobei diese Losräder über Doppelklauenkupplungen 13 und 14 mit der Hauptwelle 15 des Getriebes verbindbar sind. Hauptwelle und Abtriebswelle sind in der gezeigten Anordnung identisch. Die Klauenkupplungen weisen jeweils nicht dargestellte Synchronisiereinrichtungen auf. Die Klauenkupplung 13 ist hierbei zwischen den Zahnrädern der ersten und zweiten Gangstufe, die Klauenkupplung 14 zwischen den Zahnrädern der dritten Gangstufe und dem Eingangszahnrad 4 geschaltet.

Auf der Vorgelegewelle 5 ist noch ein Zahnrad 16 für eine Rückwärtsgangstufe vorgesehen, das ggf. über Zwischenräder mit einem Losrad 17 auf der Hauptwelle 15 verbunden ist.

Zwischen dem Losrad 10 der ersten Vorwärtsgangstufe und dem Rad 17 der Rückwärtsgangstufe ist eine doppelt wirkende Reibungskupplung 18 vorgesehen, die mit der Hauptwelle 15 verbunden ist. Die Reibungskupplung kann hierbei entweder mit dem Losrad 10 des ersten Vorwärtsganges und der Hauptwelle 15 verbunden werden, wodurch die primärseitigen rotierenden Teile des Getriebes 1 beschleunigt werden. Ebenso ist durch diese Reibungskupplung 18 eine Verbindung zwischen dem Losrad 17 des Rückwärtsganges und der Hauptwelle 15 möglich, wodurch die primärseitigen rotierenden Getriebeteile abgebremst werden. Die Verschiebung der Reibungskupplung erfolgt mithilfe eines Schaltzylinders 19.

Zur Messung der Drehzahlen der Antriebswelle 2 und der Hauptwelle 15 sind zwei Drehzahlsensoren 20 und 21 vorgesehen, deren Signale einer elektronischen Steuereinheit 22 zugeführt werden. Die elektronische Steuereinheit steuert auch die Funktion der Fahrkupplung 3, der Klauenkupplungen 13 und 14 sowie des Schaltzylinders 19. Die Beeinflussung der einzelnen Elemente des Getriebes durch die elektronische Steuereinheit 22 ist in der Fig. 1 durch gestrichelte Linien bezeichnet.

Wenn ein Gangwechsel stattfinden soll, wird die Fahrkupplung 3 ausgerückt, wonach die elektronische Steuereinheit 22 die Reibungskupplung 18 in eine der beiden möglichen Richtungen verschiebt, um entweder beim Herabschalten des Getriebes 1 die primärseitigen rotierenden Getriebeteile durch Verbinden der Reibkupplung 18 mit dem Losrad 10 des ersten Vorwärtsganges zu beschleunigen oder beim Hinaufschalten die primärseitigen rotierenden Teile des Getriebes 1 durch Verbinden der Reibkupplung 18 mit dem Losrad 17 der Rückwärtsgangstufe zu verzögern.

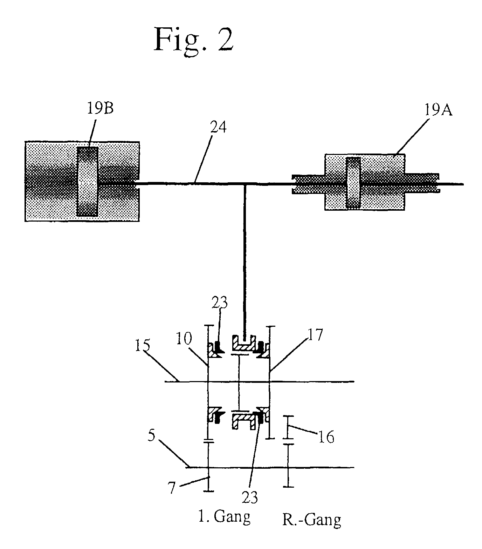

In Fig. 2 ist eine alternative Lösung zum Verzögern bzw. Beschleunigen der primärseitigen rotierenden Getriebeteile gezeigt. Der in Fig. 1 vorgesehene Schaltzylinder 19, mit dem die Reibkupplung 18 betätigt wurde, wird hier ersetzt durch zwei Schaltzylinder 19A und 19B, die auf die Reibkupplung 18 zwischen der Hauptwelle 15 und den Losrädern 10 und 17 des ersten Ganges bzw. des Rückwärtsganges wirken. Durch entsprechende Ausbildungen der Kupplungsflächen an den Losrädern 10 bzw. 17 mit entsprechenden Synchronisationskörpern 23 ist hierbei auch ein Kraftschluß zwischen der Kupplung 18 und den Losrädern möglich. Mit dem Schaltzylinder 19A wird hierbei zunächst, wie bei dem obigen Ausführungsbeispiel, ein Reibschluß hergestellt, wonach anschließend der auf die gleiche Schaltschiene 24 wirkende Schaltzylinder 19B die kraftschlüssige Kupplung zwischen Reibungskupplung und den Losrädern über die Elemente 23 einstellt.

### Bezugszeichen

- 1: Zahnräderstufengetriebe
- 2: Eingangswelle
- 3: Fahrkupplung
- 4: Eingangszahnrad
- 5: Vorgelegewelle
- 6: Eingangszahnrad der Vorgelegewelle 5
- 7/ 8/ 9: Zahnräder auf Vorgelegewelle 5 für Vorwärtsgangstufen
- 10/11/12: Losräder auf Getriebewelle für Vorwärtsgangstufen
- 13/14: Doppelklauenkupplungen
- 15: Hauptwelle
- 16: Zahnrad für Rückwärtsgang
- 17: Losrad für Rückwärtsgang
- 18: Reibungskupplung
- 19/19A/19B: Schaltzylinder
- 20/21: Drehzahlsensor
- 22: Elektronische Steuereinheit
- 23: Synchronisationskörper
- 24: Schaltschiene

## Patentansprüche

1. Synchronisiertes Zahnräderstufengetriebe (1) mit einer Getriebehauptwelle (15) und mehreren Gangstufen, deren Zahnräder jeweils über Schaltkupplungen (13, 14,18) mit der Hauptwelle (15) des Getriebes (1) bei Drehzahlgleichheit der primärseitigen rotierenden Getriebeelemente und der Hauptwelle (15) kuppelbar sind, wobei
- eine als Reibungskupplung ausgebildete Schaltkupplung (18) zwischen der Gangstufe eines Anfahrganges (7, 10) und der Hauptwelle (15) zur Schaltung des Anfahrganges und zur Steigerung der Drehzahl am Getriebeeingang zur Drehzahlanpassung der Getriebeteile für jede Vorwärtsgangstufe dient, und
- eine weitere als Reibungskupplung ausgebildete Schaltkupplung (18) zwischen der Gangstufe eines Rückwärtsganges (16, 17) und der Hauptwelle (15) zur Schaltung des Rückwärtsganges und zur Erniedrigung der Drehzahl und zur Drehzahlanpassung der Getriebeteile für jede Gangstufe dient.

2. Getriebe nach Anspruch 1, **dadurch gekennzeichnet**, daß die als Reibungskupplungen (18) ausgebildeten Schaltkupplungen (18) Elemente (23) für einen Kraft-Formschluß aufweisen.

3. Getriebe nach einem der Ansprüche 1 oder 2, **dadurch gekennzeichnet,** daß die als Reibungskupplungen (18) ausgebildeten Schaltkupplungen (18) zu einer doppelt wirkenden Reibungskupplung (18) zusammengefaßt sind, die zwischen Losrädern (10, 17) des Anfahrganges (7, 10) und des Rückwärtsganges (16, 17) angeordnet ist.

4. Getriebe (1) nach einem der vorhergehenden Ansprüche, dadurch **gekennzeichnet**, daß Drehzahlsensoren (20, 21) vorgesehen sind, mit denen die Drehzahl der Antriebs- bzw. Abtriebswelle (2, 15) das Getriebe gemessen wird, und daß diese Drehzahlsensoren (20, 21) mit einer elektronischen Steuereinheit (22) verbunden sind, die die Kupplungen (18) zwischen Vorwärts- und Rückwärtsgangstufe betätigt, bis annähernd Drehzahlgleichheit erreicht ist.

5. Getriebe (1) nach einem der vorherigen Ansprüche, dadurch **gekennzeichnet**, daß zwei Schaltzylinder (19A, 19B) zur Betätigung der Reibkupplung (18) vorgesehen sind, von denen ein Schaltzylinder (19A) zur Bildung von Reibschluß in der Reibkupplung (18) vorgesehen ist und der zweite Schaltzylinder (19B) zur Bildung einer kraftschlüssigen Kupplung zwischen Reibkupplung (18) und Losrädern (10, 17) vorgesehen ist.

6. Getriebe nach einem der vorhergehenden Ansprüche, **dadurch gekennzeichnet**, daß alle weiteren Schaltkupplungen (13,14) Klauenkupplungen sind.

## Claims

1. Synchronized variable-speed transmission (1) with a transmission main shaft (15) and a plurality of gear stages, the gear wheels of which can in each case be coupled via clutches (13, 14, 18) to the main shaft (15) of the transmission (1) when the rotational speed of the transmission elements rotating on the primary side is equal to that of the main shaft (15), wherein
- a clutch (18), which is formed as a friction clutch, between the gear stage of a starting gear (7, 10) and the main shaft (15) serves to engage the starting gear and to increase the rotational speed at the transmission input so as to adapt the rotational speed of the transmission parts for each forward gear stage, and
- an additional clutch (18), which is formed as a friction clutch, between the gear stage of a reverse gear (16, 17) and the main shaft (15) serves to engage reverse gear, to reduce the rotational speed and to adapt the rotational speed of the transmission parts for each gear stage.

2. Transmission according to Claim 1, characterised in that the clutches (18) formed as friction clutches (18) comprise elements (23) for nonpositive-positive engagement.

3. Transmission according to either of Claims 1 and 2, characterised in that the clutches (18) formed as friction clutches (18) are combined to form a double-acting friction clutch (18), which is disposed between idler wheels (10, 17) of the starting gear (7, 10) and of the reverse gear (16, 17).

4. Transmission (1) according to any one of the preceding Claims, characterised in that rotational speed sensors (20, 21) are provided, by means of which sensors the rotational speed of the drive and driven shafts (2, 15) of the transmission is measured, and that these rotational speed sensors (20, 21) are connected to an electronic control unit (22), which operates the clutches (18) between the forward and the reverse gear stage until rotational speed equality is approximately achieved.

5. Transmission (1) according to any one of the preceding Claims, characterised in that two shift cylinders (19A, 19B) are provided to operate the friction clutch (18), one shift cylinder (19A) of which is provided to establish frictional engagement in the friction clutch (18) and the second shift cylinder (19B) of which is provided to establish nonpositive coupling between the friction clutch (18) and the idler wheels (10, 17).

6. Transmission according to any one of the preceding Claims, characterised in that all additional clutches (13, 14) are dog clutches.

## Revendications

1. Boîte de vitesses synchronisée à plusieurs étages (1) dotée d'un arbre principal (15) et plusieurs rapports, dont les engrenages peuvent engrener respectivement par l'intermédiaire d'embrayages principaux (13, 14, 18) avec l'arbre principal (15) de la boîte de vitesses (1) en cas de régimes identiques des éléments de la boîte de vitesses du côté primaire en rotation et de l'arbre principal (15), sachant que
- un embrayage principal (18) conçu comme embrayage à friction, monté entre l'étage d'un rapport de démarrage (7, 10) et l'arbre principal (15) pour l'enclenchement du rapport de démarrage et pour l'augmentation du régime à l'entrée de la boîte de vitesses, est utilisé pour établir la synchronisation du régime des éléments de la boîte de vitesses pour chaque rapport de la marche avant, et
- un autre embrayage principal (18) conçu comme embrayage de friction, monté entre l'étage d'une marche arrière (16, 17) et l'arbre principal (15), assure l'engagement de la marche arrière et la réduction du régime ainsi que la synchronisation du régime des éléments de la boîte de vitesses de chaque étage.

2. Boîte de vitesses selon la revendication 1, **caractérisée** en ce que les embrayages principaux (18) conçus comme embrayages à friction (18) sont dotés d'éléments (23) assurant l'adhérence et l'engagement positif.

3. Boîte de vitesses selon une des revendications 1 et 2, **caractérisée** en ce que les embrayages principaux (18) conçus comme embrayages à friction (18) sont regroupés sous forme d'un embrayage à friction à double effet (18), monté entre les pignons foux (10, 17) du rapport de démarrage (10, 17) et de la marche arrière (16, 17).

4. Boîte de vitesses selon une des revendications ci-dessus, **caractérisée** en ce qu'il soient prévus des capteurs de régime (20, 21) permettant la mesure des régimes de l'arbre d'entrée et de l'arbre de sortie (2, 15) de la boîte de vitesses et en ce que ces capteurs de régime (20, 21) soient connectés à une unité de commande électronique (22) qui actionne les embrayages (18) entre les étages de marche avant et de marche arrière jusqu'à ce qu'une quasi-synchronisation de régime soit atteinte.

5. Boîte de vitesses selon une des revendications ci-dessus, **caractérisée** en ce qu'il soient prévus deux vérins de commande (19A, 19B) pour l'actionnement de l'embrayage à friction (18), dont un vérin de commande (19A) soit prévu pour établir l'entraînement par friction à l'intérieur de l'embrayage à friction (18) et le deuxième vérin de commande (19B) soit prévu pour établir un accouplement par adhérence entre l'embrayage à friction (18) et les pignons foux (10, 17).

6. Boîte de vitesses selon une des revendications ci-dessus, **caractérisée** en ce que tous les autres embrayages principaux (13, 14) sont des embrayages à crabots.
